(19) Europäisches Patentamt
European Patent Office
Office européen des brevets

(11) **EP 1 864 274 B1**

(12) **EUROPEAN PATENT SPECIFICATION**

(45) Date of publication and mention
of the grant of the patent:
**24.04.2019 Bulletin 2019/17**

(21) Application number: **06724232.1**

(22) Date of filing: **23.03.2006**

(51) Int Cl.:
*G09F 13/04* (2006.01) *G09F 13/22* (2006.01)
*G02B 5/02* (2006.01)

(86) International application number:
**PCT/EP2006/003306**

(87) International publication number:
**WO 2006/100126 (28.09.2006 Gazette 2006/39)**

(54) **ILLUMINATING DEVICE COMBINING A LED AND A DIFFUSING SHEET**

EINE LED UND EIN DIFFUSIONSBLATT KOMBINIERENDE BELEUCHTUNGSEINRICHTUNG

DISPOSITIF D'ECLAIRAGE COMBINANT UNE DEL ET UNE FEUILLE DE DIFFUSION

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.03.2005 FR 0502984**
**02.06.2005 US 686806 P**

(43) Date of publication of application:
**12.12.2007 Bulletin 2007/50**

(73) Proprietor: **ARKEMA FRANCE**
**92700 Colombes (FR)**

(72) Inventor: **VLOTTES, Peter**
**NL-8862 La Harlingen (NL)**

(56) References cited:
**EP-A- 1 369 224        EP-A1- 1 369 935**
**WO-A-03/052315        DE-A1- 10 308 704**
**GB-A- 2 098 002        US-A1- 2003 189 217**
**US-A1- 2004 191 550        US-B1- 6 449 439**

- **DATABASE WPI Week 200166 Derwent Publications Ltd., London, GB; AN 2001-585109 XP002402051 & JP 2001 100401 A (RICOH KK) 13 April 2001 (2001-04-13)**

**Description**

The present invention relates to a luminous device comprising at least one light-emitting diode and at least one cover made of a transparent plastic in which particles that scatter the light emitted by the light-emitting diode are dispersed.

Light-emitting diodes or LEDs are increasingly used in everyday life. They allow conventional artificial light sources, such as incandescent lamps and neon tubes, to be effectively replaced as they consume less electrical power and can operate at low voltages (12 V for example). Furthermore, they are more compact and have very long lifetimes, which may range up to 100 000 hours of operation. Although the discovery of red LEDs goes back to the 1960s, many years had to elapse before the appearance of LEDs having sufficient illumination and before the development of LEDs of different colours. At the present time, there are LEDs that emit in the red, the green or the blue, white LEDs, and LEDs that emit in the ultraviolet or infrared spectrum. Extensive research has also allowed the light flux emitted by LEDs to be significantly increased. LEDs having a light flux in excess of 3-5 lumens (Lm) have already been marketed and certain recent developments suggest that this may reach, or even exceed, 100 lumens.

Light devices that integrate one more LEDs are, for example, motor vehicle illumination devices (at the front or rear), indicating panels, luminous displays, spotlights, street lighting, box-letters, etc.

All these luminous devices consist of a light source and a cover made of a plastic whose function is to mask and protect the light source, while still ensuring good transmission of the light emitted by the light source. The plastic may be coloured or may have decorative elements or patterns. The cover also has the function of scattering the emitted light so that the illumination is softened and not dazzling. The scattering of the light emitted by the light source is achieved by dispersing scattering particles of organic or mineral nature in the plastic.

Replacing a conventional light source with an LED results in a modification of the illumination. This is because an LED, especially an LED having a high luminous flux, exhibits directional illumination whereas for example the illumination of a neon tube is from 0 to 360°. In addition, the emission spectrum of an LED is completely different from that of a conventional light source. The development of luminous devices incorporating one or more LEDs with a luminous flux of greater than 3 Lm, and in particular 5 Lm, therefore requires the plastic cover to be adapted.

The Applicant has found that a luminous device having at the least the features of the luminous device of appended claim 1 allows the problem posed to be solved.

**[Prior art]**

US 6 723 772 discloses a scattering composition comprising a transparent plastic, based on methyl methacrylate or styrene, and organic or mineral scattering particles. The particle content is between 0.1 and 20% by weight, or expressed differently between 1 and 500 g/m$^2$.

US 2004/0191550 discloses a sheet comprising a layer (A) composed of a resin based on methyl methacrylate and one or two layers (B) composed of a blend of a resin based on methyl methacrylate and a resin based on vinylidene fluoride. The sheet may contain organic or mineral scattering particles in the layer (A) and be illuminated by a neon lamp or by an LED.

EP 1 369 224 discloses a coextruded sheet comprising at least two layers - a layer of a thermoplastic filled with organic scattering particles and a layer of a transparent thermoplastic. The sheet may be illuminated by an LED. Within the context of the present invention, the process for manufacturing the cover that is illuminated by the LED is simpler as the cover is not manufactured by coextrusion but by simple extrusion or else by the casting process in the case of PMMA. The cover according to the invention therefore has only a single layer.

WO 03/052315 discloses a luminous device that combines a cover made of a transparent plastic and an LED. The transparent plastic contains 1.5 to 2.5% by weight of $BaSO_4$ or polystyrene particles. In the case of crosslinked plastic particles, the content varies from 0.1 to 10% by weight.

US 6 449 439 discloses a unitary light diffusing cavity that comprises a plastic or polymer material which is loaded with scattering particles. A high impact modified polystyrene is disclosed that comprises different concentrations of TiO2, the most important being 5%.

These documents make no reference to the combination of a LED having a high luminous flux, greater than 5 Lm, and a transparent plastic comprising by weight 5 to 30% of scattering particles, as described in appended claim 1.

**[Brief description of the invention]**

The invention relates to a luminous device according to claim 1.

The invention relates to a luminous device according to claim 1 in which at least one LED having a luminous flux of greater than 5 Lm, preferably greater than 10 Lm and even more preferably greater than 50 is used.

The invention also relates to the uses of this luminous device.

The invention will be more clearly understood on reading the following detailed description, from the non-limiting examples of embodiments thereof and on examining the appended figures.

**[Figures]**

Figure 1 shows the diagram of an LED **1.** This consists of an anode **2,** a cathode **3** and a conducting wire **4** which allow the semiconductor **5** to be powered, the semiconductor itself being placed on a light-reflecting dish **6.** A protective shell **7** made of a transparent plastic protects the semiconductor and transmits the emitted light.

Figure 2 shows the emission spectrum (relative intensity in % as a function of the wavelength in nm) characteristic of a colour LED.

Figure 3 shows the emission spectrum of a white LED (relative intensity in % as a function of the wavelength in nm) that uses the re-emission of a phosphorescent compound.

Figure 4 shows the typical radiation profile of an LED (relative intensity in % as a function of the angular displacement $\theta$ in °).

Figure 5 shows an example of a luminous device. This is a letter **8** (an A) of a light sign illuminated by LEDs **1.** To simplify matters, the electrical power supply wires have not been shown in the figure. The letter A includes, on the front face, a cover **9** that transmits the light emitted by the LEDs, while masking and protecting the LEDs. The other faces of the letter **8,** for example the face **10,** are opaque.

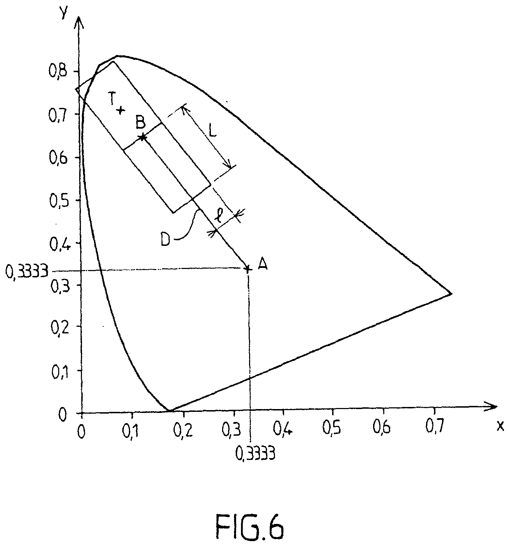

Figure 6 shows the x/y chromaticity diagram, the achromatic point A being indicated therein by coordinates $x_A$ = 1/3 and $y_A$ = 1/3. A colour LED is shown in this diagram by the point B having coordinates $x_B$ and $y_B$. The line D connects the point A with the point B. The light from the colour LED transmitted by a coloured cover is characterized by the point T. The point T must lie within a rectangle having the point B as orthocentre. This rectangle has a half-length L that corresponds to 0.2 x/y units and a half-width l that corresponds to 0.05 x/y units.

**[Detailed description]**

The term "transparent plastic" denotes a plastic of thermoplastic type, having a light transmission in the visible range of at least 50%, preferably at least 70% and even more preferably at least 80% according to the DIN 67-507 standard (this is the light transmission of the transparent plastic with no scattering particle; when the scattering particles are dispersed in the transparent plastic, the transparency decreases).
In the frame of the present invention the transparent plastic is PMMA.
PMMA is transparent plastic of choice because it is easy to process, is commercially available and has a high transparency. In addition, the plastic exhibit excellent thermomechanical strength, allowing compact luminous devices to be produced. This is because, although the energy efficiency of an LED (that is to say the efficiency of converting electrical energy into light energy) is much better than for an incandescent lamp, some of the energy is nevertheless converted into heat. In the case of compact luminous devices, this heat builds up and rapidly raises the temperature inside the device.
**The term "PMMA" denotes** a methyl methacrylate (MMA) homopolymer or a copolymer comprising from 80 to 99.5% by weight of methyl methacrylate and from 0.5 to 20% by weight of at least one monomer having at least one ethylenic unsaturation that can copolymerize with methyl methacrylate. These monomers are well known and mention may be made, in particular, of styrene, alpha-methylstyrene, acrylic and methacrylic acids and alkyl-(meth)acrylates in which the alkyl group has from 2 to 4 carbon atoms. As examples, mention may be made of methyl acrylate and ethyl, butyl or 2-ethylhexyl (meth)acrylate.
Advantageously, this is a methyl methacrylate homopolymer or a copolymer comprising, by weight, 90 to 99.5%, of methyl methacrylate and 0.5 to 10% of at least one monomer having at least one ethylenic unsaturation that can be copolymerized with methyl methacrylate. Preferably, the comonomer is methyl acrylate or ethyl acrylate.
PMMA is a transparent plastic appreciated in particular because it possesses excellent ageing resistance, especially resistance to ultraviolet radiation, and good scratch resistance.
The PMMA may contain an impact modifier, which improves the impact resistance thereof. The impact modifier is in the form of fine particles having an elastomer core and at least one thermoplastic shell, the size of the particles being in general less than 1 $\mu$m and advantageously between 50 and 300 nm. The impact modifier is prepared by emulsion polymerization. The impact modifier content in the PMMA is between 0 and 20%, preferably between 0 and 10%, by weight.

The core may for example consist of:

- an isoprene or butadiene homopolymer; or
- isoprene copolymers with at most 30 mol% of a vinyl monomer; or
- butadiene copolymers with at most 30 mol% of a vinyl monomer.

The vinyl monomer may be styrene, an alkyl styrene, acrylonitrile or an alkyl(meth)acrylate.

The core may also consist of:

- an alkyl(meth)acrylate homopolymer; or
- copolymers of an alkyl(meth)acrylate with at most 30 mol% of a monomer chosen from another alkyl(meth)acrylate and a vinyl monomer.

The alkyl(meth)acrylate is advantageously butyl acrylate. The vinyl monomer may be styrene, an alkyl styrene, acrylonitrile, butadiene or isoprene.

Advantageously, the core may be completely or partly crosslinked. It is sufficient to add at least difunctional monomers during the preparation of the core. These monomers may be chosen from poly(meth)-acrylic esters of polyols, such as butylene di(meth)-acrylate and trimethylolpropane trimethacrylate. Other difunctional monomers may for example be divinylbenzene, trivinylbenzene, vinyl acrylate and vinyl methacrylate. The core may also be crosslinked by introducing into it, by grafting or as comonomer during the polymerization, unsaturated functional monomers such as unsaturated carboxylic acid anhydrides, unsaturated carboxylic acids and unsaturated epoxides. As examples, mention may be made of maleic anhydride, (meth)acrylic acid and glycidyl methacrylate.

The shell or shells are styrene, alkyl styrene or methyl methacrylate homopolymers or copolymers containing at least 70 mol% of one of these monomers mentioned above and at least one comonomer chosen from the other monomers mentioned above, another alkyl-(meth)acrylate, vinyl acetate and acrylonitrile. The shell may be functionalized by introducing thereinto, by grafting or as comonomer during polymerization, unsaturated functional monomers such as unsaturated carboxylic acid anhydrides, unsaturated carboxylic acids and unsaturated epoxides. As examples, mention may be made of maleic anhydride, (meth)acrylic acid and glycidyl methacrylate.

As examples of impact modifiers, mention may be made of core-shell copolymers having a polystyrene shell and core-shell copolymers having a PMMA shell. There are also core-shell copolymers having two shells, one made of polystyrene and the other on the outside made of PMMA. Examples of impact modifiers and their method of preparation are described in the following patents: US 4 180 494, US 3 808 180, US 4 096 202, US 4 260 693, US 3 287 443, US 3 657 391, US 4 299 928, US 3 985 704 and US 5 773 520.

Advantageously, the core represents 70 to 90% and the shell 30 to 10% by weight of the impact modifier.

The impact modifier may be of the soft/hard type. As an example of an impact modifier of the soft/hard type, mention may be made of that consisting:

(i) of 75 to 80 parts of a core comprising at least 93 mol% of butadiene, 5 mol% of styrene and 0.5 to 1 mol% of divinylbenzene and
(ii) of 25 to 20 parts of two shells essentially of the same weight, the inner one made of polystyrene and the other outer one made of PMMA.

As another example of a soft/hard type impact modifier, mention may be made of that having a poly(butyl acrylate) or butyl acrylate/butadiene copolymer core and a PMMA shell.

The impact modifier may also be of the hard/soft/hard type, that is to say it contains, in this order, a hard core, a soft shell and a hard shell. The hard parts may consist of the polymers of the shell of the above soft/hard copolymers and the soft part may consist of the polymers of the core of the above soft/hard copolymers.

Mention may be made, for example, of an impact modifier of the hard/soft/hard type consisting:

(i) of a core made of a methyl methacrylate/ethyl acrylate copolymer;
(ii) of a layer made of a butyl acrylate/styrene copolymer;
(iii) of a shell made of a methyl methacrylate/ethyl acrylate copolymer.

The impact modifier may also be of the hard (core)/soft/semi-hard type. In this case the "semi-hard" outer shell consists of two shells, one being the intermediate shell and the other the outer shell. The intermediate shell is a copolymer of methyl methacrylate, styrene and at least one monomer chosen from alkyl acrylates, butadiene and isoprene. The outer shell is a PMMA homopolymer or copolymer.

An example of a hard/soft/semi-hard impact modifier is that consisting, in this order:

(i) of a core made of a methyl methacrylate/ethyl acrylate copolymer;
(ii) of a shell made of a butyl acrylate/styrene copolymer;
(iii) of a shell made of a methyl methacrylate/butyl acrylate/styrene copolymer; and
(iv) of a shell made of a methyl methacrylate/ethyl acrylate copolymer.

The PMMA may also contain at least one anti-UV additive that increases the lifetime of the PMMA. The PMMA may contain other additives that are well known to those skilled in the art. These may for example be an antistatic agent, a flame retarder, an antioxidant, etc.

**Type of LED**

An LED is a light source that exploits the physical principle of electroluminescence, that is to say the emission of light by a semiconductor when a potential difference is applied to a junction of the p-n type. For further details, the reader may refer to Ullmann's Encyclopaedia of Industrial Chemistry, Volume A9, 5th edition, "Electroluminescent Materials and Devices", pages 255-264 or to Chapter 7 of the work by S.M. Sze "Modern Semiconductor Device Physics" published by Wiley (ISBN: 0471152374) in 1997. The LED therefore comprises the semiconductor itself and also other elements for the operation and handling of the LED, such as a transparent protective shell, supply contacts (anode/cathode), optionally a dish that reflects the emitted light, etc. According to the invention, the scattering particles are not dispersed in the transparent protective shell but in the cover.

Among LEDs that emit in the visible spectrum, distinction may be made between colour LEDs and white LEDs.

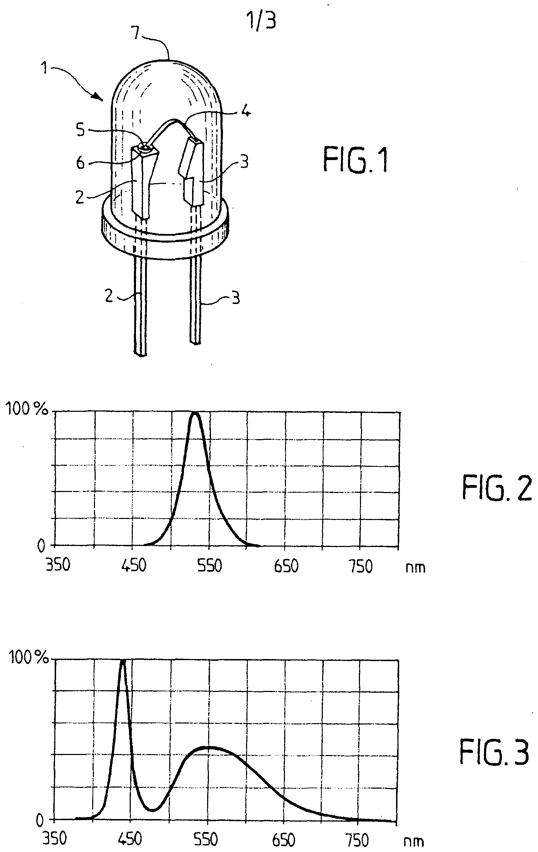

The emission spectrum of a colour LED is very narrow and has a mid-height width of between 20 and 55 nm, preferably between 30 and 50 nm (as may be seen in Figure 2). The emission spectrum depends on the nature of the p-n junction, and therefore on the chemical nature of material used for the semiconductor. The following equation connects the wavelength $\lambda$ (in nm) of the emitted light to the bandgap $E_{band}$ (in eV), which depends on the semiconductor material used:

$$\lambda = \frac{hc}{E_{band}}$$

where c denotes the velocity of light ($3 \times 10^8$ m/s) and h denotes Planck's constant ($4.136 \times 10^{-15}$ eV/s).

For example, if the semiconductor material is gallium arsenide GaAs, the bandgap is 1.35 eV and the LED emits in the near infrared at around 920 nm. Gallium phosphide arsenide GaAsP, gallium phosphide GaP, gallium nitride GaN and gallium indium nitride GaInN are other examples among other intermetallic compounds that can be used for manufacturing an LED.

The emission of white light by an LED is more problematic as it is necessary to combine the three essential components of white light, namely blue, red and green. It is also necessary to mix these three components so as to obtain a white light having good colour rendition or CRI and a good colour temperature (in kelvin). At the present time, there are at least three technologies for obtaining emission of white light:

- the first consists in combining an LED emitting in the blue with one or more phosphorescent compounds that reemit in the yellow. This is a method that is widely used at the present time, but the CRI (colour rendition index) is poor, less than 75, and there is often a halo problem due to the fact that the blue light and the re-emitted yellow light do not mix everywhere uniformly;
- the second consists in combining an LED emitting in the ultraviolet with at least one phosphorescent compound, each re-emitting light in a given colour. An example of a white LED using this technology is given in document US 6 084 250. For example, an LED emitting between 370 and 410 nm is combined with a mixture of phosphorescent compounds, namely Eu:BaMgAl$_{l1}$O$_{17}$, Cu:ZnS and YVO$_4$. This type of LED gives a white light having a good CRI, close to that of fluorescent lamps; and

- the third consists in mixing the colours emitted by several colour LEDs so as to obtain a white light. This technique has the advantage of being more flexible as it does not require the use of phosphorescent compounds. It is possible, by acting separately on the intensity of the LEDs, for the colour temperature to be finely adjusted, thereby making it possible to obtain a whole range of white lights (ranging from "hot" white to cold blue-white). In practice, to obtain white light, it is necessary for the LEDs to emit monochromatic light corresponding the sensitivity maxima of each type of cone present in the human eye (450 nm in the case of blue, 550 nm in the case of green and 620 nm in the case of red). If LEDs emitting at this precise frequency are not available, compensation is necessary by adjusting the emission intensity.

The emission spectra of white LEDs are broader than those of colour LEDs (an example of a spectrum is given in Figure 3). In the case of white LEDs, the scattering plastic according to the invention makes it possible to eradicate the drawbacks associated with the three technologies, for example the halo phenomenon associated with the first technology or else the imperfect colour mixing of the third technology. The scattering plastic according to the invention therefore applies particularly well for the production of luminous devices incorporating one or more white LEDs.

**Scattering particles**

To scatter the light emitted by the LED, the scattering particles must have a mean diameter of between 0.5 and 100 $\mu$m, advantageously between 1 and 80 $\mu$m and preferably between 1 and 70 $\mu$m. The particle size distribution is relatively narrow, depending on the type of particle and depending on the method of obtaining the particles. Preferably, the distribution covers the range from 0.01 to 200 $\mu$m, that is to say 90% of the particles have a size between 0.01 and 200 $\mu$m.

It is also necessary for the difference between the refractive indices (measured according to ASTM D 542) of the scattering particles and of the transparent plastic to be greater than 0.02 and preferably between 0.02 and 1.

The scattering particles used in the frame of the invention are described below. The content of scattering particles is by weight between 5 and 30%, most preferably between 5 and 10% (wt% relative to the transparent plastic).

**Mineral particles**

Among mineral scattering particles, mention may be made of $BaSO_4$, $TiO_2$, $ZnO$, $CaCO_3$, $MgO$ and $Al_2O_3$ particles, whereas in the frame of the present invention only particles of $BASO_4$ are used.

Mineral scattering particles having a mean diameter of between 0.5 and 15 $\mu$m, preferably between 0.5 and 10 $\mu$m, are preferred. The advantage of mineral scattering particles over organic scattering particles is that it is possible to obtain good light scattering with a smaller amount. Typically, the content of mineral scattering particles is between 3 and 15%, advantageously between 3 and 10% and preferably between 5 and 10%, whereas in the frame of the present invention an amount of at least 5% and at most 30% must be present. The mineral scattering particles are preferably colourless.

Another advantage of mineral scattering particles is associated with their thermal stability. This is because, if the scattering particles are mixed with the transparent plastic in the melt state, it is necessary to reach high values in order to melt the plastic and facilitate homogenization. For example, in the case of PMMA, homogenization is carried out at temperatures between 210 and 300°C. The organic scattering particles are liable to degrade at high temperature and result in yellowing/blackening of the particles. This detracts from the final appearance of the compound.

$BaSO_4$ particles are chosen (1.64 refractive index $n_D$) as they scatter the light very well, are very easily dispersed in the transparent plastic and are perfectly colourless. In the case of the process for manufacturing cast PMMA, $BaSO_4$ particles are dispersed very well in the composition to be cured and do not aggregate therein. As an example, Blanc Fixe N particles sold by the German company Sachtleben Chemie may be used.

Other mineral particles outside the scope of the present invention are hollow glass microspheres, as described in International Application WO 03/072645**.** For example, glass microspheres sold under the name SCOTCHLITE® by 3M (Minnesota Mining and Manufacturing Company) may be suitable. These microspheres are obtained by known methods. According to EP 1 172 341**,** it is possible to add, for example, an inflammable liquid to a compound containing ingredients suitable for the preparation of glass and a blowing agent, and then to subject the entire composition to wet milling so as to obtain a dispersion of particles having a mean size of 3 $\mu$m. This slurry is then atomized by means of a two-fluid nozzle, at a pressure of between 0.2 and 2 MPa, so as to form droplets. Heating these droplets results in the formation of hollow glass microspheres. As ingredients suitable for preparing the glass, mention may be made of silica sand, volcanic ash, perlite, obsidian, silica gel, zeolite, bentonite, borax, boric acid, $Ca_3(PO)_4$, $Na_2SO_4$, $Mg_4P_2O7$, $Al_2O_3$, a compound deriving from $SiO_2$, $B_2O_3$ or $Na_2O$. It is preferred to use a glass based on borosilicates, especially a soda-lime glass. The blowing agent generates gas when the mix of ingredients resulting in the glass undergoes vitrification by heating, and has the effect of producing substantially spherical hollow particles of molten vitrified glass. The blowing agent may for example be sodium, potassium, lithium, calcium, magnesium, barium, aluminium or zinc sulphate, carbonate, nitrate or acetate.

**Dyes**

It is possible to add one or more dyes or pigments to the transparent plastic in order to obtain a coloured or tinted cover. A person skilled in the art knows how to choose the dye(s) or pigment(s) needed to obtain a given colour or tint, being characterized by given x/y coordinates. As examples of dyes and pigments, mention may be made of the following: copper phthalocyanine green, copper phthalocyanine blue, ultramarine blue, pyrazolone yellow, diketopyrrolopyrrole red, red iron oxide, ultramarine, chromium-titanium yellow, and dyes of the anthraquinone type.

Examples

- PMMA cover having a yellow colour obtained using 0.08 to 0.09% of pyrazolone yellow;
- PMMA cover having a green colour obtained using 0.01 to 0.02% of copper phthalocyanine; and
- PMMA cover having a red colour, obtained using 0.06 to 0.07% naphthol AS.

**Surface roughness**

At least one of the faces of the cover may have a relatively pronounced surface roughness (producing what is often called a "frosted" effect). The surface roughness may be obtained in several ways. According to a 1st method, in the case of a cast sheet, the glass mould, which forms the sheet, has itself a surface roughness that has been obtained by treating the glass of the mould, for example with hydrofluoric acid. According to a 2nd method, sandblasting may be used as taught in document WO 03/083564 or US 3 497 981. The surface roughness, denoted by Ra, is expressed in microns and can be measured using a roughness meter (for example of the Talysurf Surtronic 3P brand from Rank-Taylor-Hobson) according to the ISO 4287 and ISO 4288 standards. The value of the surface roughness Ra is of the order of a few $\mu$m. This value is between 0.5 and 4 $\mu$m, preferably between 1 and 3 $\mu$m.
The surface roughness on at least one of the faces of the cover allows the light-scattering effect of the scattering particles to be enhanced.
The faces of the cover according to the invention may also be perfectly smooth and not have any pronounced roughness. In this case, the value of the surface roughness Ra is less than 400 nm, advantageously less than 300 nm and preferably less than 100 nm.

**Method of obtaining the cover**

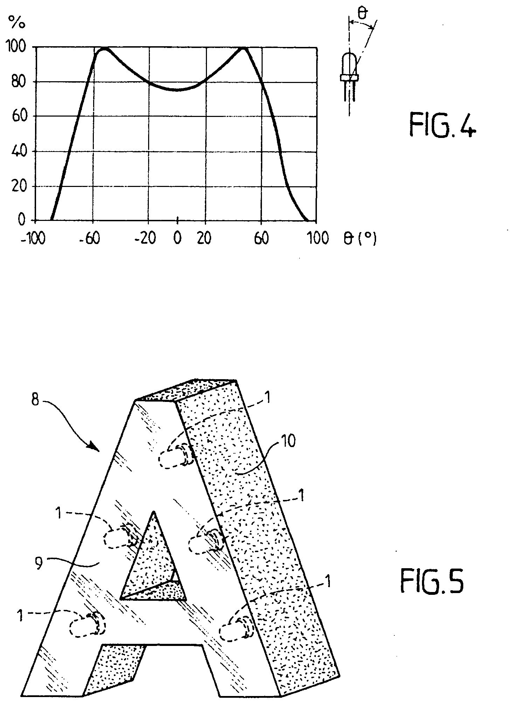

There are several methods known to those skilled in the art for producing the cover of the luminous device of the invention. The scattering particles and optional other additives (dye(s), impact modifier, UV stabilizer, antioxidant, etc.) are mixed with the transparent plastic by means of an extruder or any other mixing tool suitable for thermoplastics as known to those skilled in the art. Recovered at the exit of the extruder are granules that are then formed to the desired shape using a conversion technique for thermoplastics, for example injection moulding or compression moulding. It is also possible to adapt the extruder in order to produce a sheet. The cover is then obtained after forming the sheet to the desired shape after cutting and/or thermoforming.
Since in the frame of the present invention PMMA is used, it is also possible to use the cast process to manufacture the sheet (then referred to as a cast PMMA sheet). This process consists in using a mould formed from two flat plates, for example made of inorganic glass, which are separated by a peripheral seal, generally made of polyvinyl chloride, for sealing between the two plates. The mould is closed by clamps placed along the sides. The composition to be polymerized (i.e. the methyl methacrylate and optionally the comonomer(s)), to which a polymerization initiator in sufficient amount has been added, is poured into the mould. The composition to be polymerized contains the scattering particles and all the other optional additives (for example demoulding agent, chain transfer agent for controlling the average molecular weight of the final polymer, antioxidant, UV stabilizer, dye(s), etc.). The polymerization is carried out or completed, depending on the case, by placing the mould in water (a process called "liquid pool" polymerization) or in an oven at the necessary temperature (40-80°C), and then in an oven (at about 100-130°C) for the post polymerization. The thickness of the seal determines the thickness of the polymer sheet obtained.
The cover may have all kinds of geometries, depending on the nature of the intended application. For example, it may be in the form of a flat, curved or domed sheet, whether rectangular or circular, in the form of a disc, etc. It may also take the form of a letter of the alphabet or of any other sign or symbol in the case of an illuminated sign, as illustrated for example in Figure 5. Examples of other shapes are also given in the following documents: US 2004/0255497, FR 2 857 434, EP 1 402 504 **and** US 2005/0039361.
The cover has a thickness of between 0.1 and 15 cm, but is still between 0.1 and 10 cm, advantageously between 0.1 and 7 cm, preferably between 0.1 and 5 cm and even more preferably between 0.2 and 4 cm.

**Luminous device**

The luminous device according to the invention is described in appended claim 1. The cover makes it possible to:

- ensure transmission of the light emitted by the LED (s) ;
- mask and protect the LED(s);
- provide a uniform and nondazzling illumination;
- reduce the directional lighting effect of the LED(s); and
- reduce, or even eliminate the drawbacks of LEDs, especially the halo effects in white LEDs.

The cover is in the form of a single layer and is not obtained by coextrusion of two or more layers as in EP 1369224 A1.

Advantageously, the luminous flux is between 5 and 200 Lm, preferably between 5 and 100 Lm, even more preferably between 10 and 100 Lm and very preferentially between 50 and 100 Lm. This luminous flux can be measured using the method recommended by the CIE (International Commission on Illumination) in Publication 127 (1997).

Thanks to LEDs having a high luminous flux, it is possible to reduce the number of LEDs in order to obtain a given illumination. Compared with an incandescent lamp or a neon tube, it is possible to obtain luminous devices that are more compact and consume less electrical power.

It may be a colour LED or a white LED.

A colour LED may be combined with a colourless cover or better still a coloured cover. To obtain the best illumination effect, it is preferable to combine a coloured cover with a colour LED and it is preferable for the colour of the cover to be as close as possible to that emitted by the LED. A more mathematic interpretation may be given by using the x/y chromaticity diagram, which allows any colour to be represented. Thus, relative to the straight line D passing through the achromatic point A of coordinates $x_A$ = 1/3 and $y_A$ = 1/3 and through the point B of the colour LED of coordinates $x_B$ and $y_B$, the light transmitted by the coloured cover, represented in the chromaticity diagram by the point T, must preferably lie on the line D at 0.2 x/y units, preferably 0.1 x/y units, from the point B and along a line perpendicular to D, at 0.05 x/y units, preferably 0.03 x/y units, from the point B. The point T must therefore lie inside a rectangle having the point B as orthocentre. This rectangle has a half-length L that corresponds to 0.2 x/y units, preferably 0.1 x/y units, and a half-width l that corresponds to 0.05 x/y units, preferably 0.03 x/y units.

Red LED

A red LED may emit between 610 and 640 nm. For example, it is possible to envisage using a SUPERFLUX HPWT-RD00 or HPWT-MD00 red LED sold by Lumileds, which has a luminous flux of 3.5 Lm, whereas this is not within the scope of the present invention.

It may also be the D 001 RGB 24 V red LED emitting between 619 and 629 nm, sold by Tridonic & co, which has a luminous flux of 23.6 Lm. Another example is the red LED P 511 R emitting between 624 and 630 nm, sold by Tridonic & co, which has a minimum luminous flux of 135 Lm.

Green LED

A green LED may emit between 500 and 550 nm. For example, it is possible to envisage using an HPWN-MG00-0000 green LED sold by Lumileds, which has a luminous flux of 3.0 Lm, whereas this is not within the scope of the present invention.

Yellow LED

A yellow LED may emit between 570 and 610 nm.

Blue LED

A blue LED may emit between 440 and 500 nm.

It is also possible to combine a white LED with a colourless cover or with a coloured cover. The following examples of coloured covers may be given. In these examples, the three values L, a*, b* are used to characterize the principal colour in the CIELAB system. L denotes the luminosity and extends from 0 (black) to 100 (white). The value a* measures the red and green of the colour: the colours tending toward green have a negative a* value while those tending toward the red have a positive a* value. The b* value measures the blue and the yellow of the colour: colours tending toward the yellow have a positive b* value while those tending toward the blue have a negative b* value. The L, a\*, b\* values are measured using a colorimeter (especially according to the ASTM E 308 standard).

Examples

- a PMMA cover having a luminosity L of 23.7, an a\* value of 0.3 and a b\* value of -0.8;
- a PMMA cover having a luminosity L of 35.5, an a\* value of -0.5 and a b\* value of -1.5;
- a PMMA cover having a luminosity L of 34.1, an a\* value of -18.8 and a b\* value of -0.1;
- a PMMA cover having a luminosity L of 34.6, an a\* value of 3.1 and a b\* value of -32.7; and
- a PMMA cover having a luminosity L of 33.2, an a\* value of 8.5 and a b\* value of -28.2.

Preferably, a white LED is combined with a colourless cover.

Examples of white LEDs

It is possible, for example, to envisage using a white LED of the LUXEON STAR type sold by Lumileds. It is also possible to envisage using a white LED sold by Tridonic & co under the reference Daylight P115-BL, which has a luminous flux of at least 27.7 Lm.

The cover is separated from the LED(s) by a distance of between 1 and 50 cm, better still between 2 and 50 cm, preferably between 2 and 20 cm and even more preferably between 3 and 20 cm. The luminous device is distinguished from edge-emitting devices, as described for example in EP 0 893 481. This is because, in the luminous device according to the invention, it is not the edge of the cover that is illuminated but one of the faces of the cover.

**[Uses]**

The luminous device according to the invention has a variety of applications such as, for example:

- interior lighting (living room lamps, office lamps, etc.);
- advertising displays;
- direction lighting or escape route marking;
- illuminated signs (in this case, the cover may especially have the form of a letter, a number, a symbol or any other sign);
- traffic signalling; and
- automobile lighting (for example the luminous device may be a headlamp, a daytime light, a direction indicator, a stop light, a fog lamp, reversing light, etc.)

The invention also relates to these uses.

**[examples]**

Several cast sheets in PMMA containing different amounts of particles of $BaSO_4$ (scattering particles from Sachtleben Chemie, average size 8 $\mu$m) and having a thickness of 3 mm were prepared according to common techniques. The sheets were used as covers for LEDs of luminous flux, ones of flux lower than 5 Lm, not being within the scope of the present invention, and others of flux higher than 5 Lm. The distance between the cover sheet and the top of the LED was also varied. The LED is positioned in front of the surface of the sheet and not along its edge.

**LEDs of flux < 5** Lm (outside the scope of the invention)

OS LM 03 A-A red
OS LM 03 A-T green
OS LM 03 A-B blue
OS LM 03 A-W white
OS LM 03 A-Y yellow

All these LEDs are from OSRAM.

**LEDs of flux > 5 Lm**

Luxeon star LXHL-LM1D white
Luxeon star LXHL-LM3C green : minimum flux 50 Lm (700 mA, junction temperature : 25°C)
Luxeon star LXHL-LB3C blue : minimum flux 20 Lm (700 mA, junction temperature : 25°C)
Luxeon star LXHL-LH3C red : minimum flux 120 Lm (1400 mA, junction temperature : 25°C)
Luxeon star LXHL-ML1D amber

All these LEDs are from LUMILED.

Table I gives the visual observations of the luminous devices that associate the LEDs and the sheets as the distance between the LED and the surface of the LED is varied.

**Table I**

| sheet | amount of $BaSO_4$ (wt%) | LED with a luminous flux < 5 Lm | | | LED with a luminous flux > 5 Lm | | |
|---|---|---|---|---|---|---|---|
| distance sheet / top of the LED | | 3 cm | 6 cm | 9 cm | 3 cm | 6 cm | 9 cm |
| A | 3% | ≈ | + | + | - | - | - |
| B | 3.5% | ≈ | + | + | - | - | - |
| C | 5.5% | + | + | ≈ | - | ≈ | ≈/+ |
| D | 5.7% | + | + | ≈ | - | ≈ | ≈/+ |
| E | 7% | + | + | ≈ | + | + | + |
| F | 7.5% | + | + | ≈ | + | + | + |

**observations**

+ good visual effect
- unsuffisient visual effect (poor diffusing properties and/or uneveness of the illumination)
≈ debatable effect (between + and -)

The luminous device associating sheet F and a low power LED is not bright enough when the distance exceeds 6 cm whereas for the high power LEDs, the distance is less critical. For sheets E and F, the luminous devices provide an even and correct illumination (without dark areas or hot spots).

**Claims**

1. Luminous device comprising at least one LED having a luminous flux of greater than 5 Lm, and a cover made of a transparent plastic in which scattering particles with a content by weight of 5 to 30% relative to the transparent plastic are dispersed and
characterized that the cover is in the form of a single layer and that the scattering particles are chosen from $BaSO_4$ and that the transparent plastic is chosen from PMMA that is a methyl methacrylate homopolymer or a copolymer comprising from 80 to 99.5% by weight of methyl methacrylate and from 0.5 to 20% by weight of at least one monomer having at least one ethylenic unsaturation that can copolymerize with methyl methacrylate.

2. Luminous device according to claim 1, **characterized in that** the transparent plastic is of the thermoplastic type and has a light transmission in the visible range of at least 50%, according to the DIN 67-507 standard.

3. Luminous device according to either claim 1 or 2, **characterized in that** the transparent plastic is a copolymer comprising, by weight, 90 to 99.5%, of methyl methacrylate and 0.5 to 10%, of at least one monomer having at least one ethylenic unsaturation that can be copolymerized with methyl methacrylate.

**4.** Luminous device according to one of the preceding claims, **characterized in that** the monomer having at least one ethylenic unsaturation that can be copolymerized with methyl methacrylate is chosen from styrene, alpha-methylstyrene, acrylic and methacrylic acids and alkyl(meth)acrylates in which the alkyl group has from 2 to 4 carbon atoms.

**5.** Luminous device according to one of the preceding claims, **characterized in that** the monomer having at least one ethylenic unsaturation that can be copolymerized with methyl methacrylate is chosen from methyl acrylate or ethyl acrylate.

**6.** Luminous device according to one of the preceding claims, **characterized in that** the difference between the refractive indices according to ASTM D 542 of the scattering particles and the transparent plastic is greater than 0.02.

**7.** Luminous device according to claim 1, **characterized in that** the mean diameter of the mineral scattering particles is between 0.5 and 15 $\mu$m.

**8.** Luminous device according to either of claims 1 and 7, **characterized in that** the content of scattering particles is between 5 and 10%.

**9.** Luminous device according to one of claims 1 to 8, **characterized in that** at least one of the faces of the cover has a roughness Ra of between 0.5 and 4 $\mu$m.

**10.** Use of the luminous device according to any one of Claims 1 to 9 for :

- interior lighting;
- advertising displays;
- direction lighting or escape route marking;
- illuminated signs ;
- traffic signalling; and
- automobile lighting.

**11.** Use according to claim 10, **characterized in that** the cover has the form of a letter or a number.

**12.** Use according to claim 10, **characterized in that** the automobile lighting is a headlamp, a daytime light, a direction indicator, a stop light, a fog lamp or a reversing light.

**Patentansprüche**

**1.** Leuchtvorrichtung, umfassend wenigstens eine LED mit einem Lichtstrom von größer als 5 lm und eine Abdeckung aus einem transparenten Kunststoff, in dem streuende Partikel mit einem Gewichtsgehalt von 5 bis 30 %, bezogen auf den transparenten Kunststoff, dispergiert sind, und
**dadurch gekennzeichnet, dass** die Abdeckung in Form einer einzelnen Schicht vorliegt und dass die strahlenden Partikel ausgewählt sind aus $BaSO_4$ und dass der transparente Kunststoff ausgewählt ist aus PMMA, bei dem es sich um ein Methylmethacrylat-Homopolymer oder ein Copolymer handelt, das von 80 bis 99,5 Gew.-% Methylmethacrylat und von 0,5 bis 20 Gew.-% an wenigstens einem Monomer mit wenigstens einer ethylenischen Unsättigung, das mit Methylmethacrylat copolymerisieren kann, umfasst.

**2.** Leuchtvorrichtung gemäß Anspruch 1, **dadurch gekennzeichnet, dass** der transparente Kunststoff vom thermoplastischen Typ ist und eine Lichtdurchlässigkeit in dem sichtbaren Bereich von wenigstens 50 % gemäß dem Standard DIN 67-507 aufweist.

**3.** Leuchtvorrichtung gemäß einem der Ansprüche 1 und 2, **dadurch gekennzeichnet, dass** der transparente Kunststoff ein Copolymer ist, das von 90 bis 99,5 Gew.-% Methylmethacrylat und von 0,5 bis 10 Gew.-% an wenigstens einem Monomer mit wenigstens einer ethylenischen Unsättigung, das mit Methylmethacrylat copolymerisiert werden kann, umfasst.

**4.** Leuchtvorrichtung gemäß einem der vorstehenden Ansprüche, **dadurch gekennzeichnet, dass** das Monomer mit wenigstens einer ethylenischen Unsättigung, das mit Methylmethacrylat copolymerisiert werden kann, ausgewählt ist aus Styrol, alpha-Methylstyrol, Acryl- und Methacrylsäure und Alkyl(meth)acrylaten mit 2 bis 4 Kohlenstoffatomen der Alkylgruppe.

**5.** Leuchtvorrichtung gemäß einem der vorstehenden Ansprüche, **dadurch gekennzeichnet, dass** das Monomer mit wenigstens einer ethylenischen Unsättigung, das mit Methylmethacrylat copolymerisiert werden kann, ausgewählt ist aus Methylacrylat oder Ethylacrylat.

**6.** Leuchtvorrichtung nach einem der vorstehenden Ansprüche, **dadurch gekennzeichnet, dass** der Unterschied zwischen den Brechungsindizes der streuenden Teilchen und des transparenten Kunststoffs gemäß ASTM D 542 größer als 0,02 ist.

**7.** Leuchtvorrichtung gemäß Anspruch 1, **dadurch gekennzeichnet, dass** der mittlere Durchmesser der mineralischen streuenden Partikel zwischen 0,5 und 15 $\mu$m beträgt.

**8.** Leuchtvorrichtung gemäß einem der Ansprüche 1 und 7, **dadurch gekennzeichnet, dass** der Gehalt an streuenden Partikeln zwischen 5 und 10% beträgt.

**9.** Leuchtvorrichtung gemäß einem der Ansprüche 1 bis 8, **dadurch gekennzeichnet, dass** wenigstens eine der Seiten der Abdeckung eine Rauigkeit Ra von zwischen 0,5 und 4 $\mu$m aufweist.

**10.** Verwendung der Leuchtvorrichtung gemäß einem der Ansprüche 1 bis 9 für:

- Innenbeleuchtung;
- Werbeanzeigen;
- Richtungsanzeige oder Fluchtwegkennzeichnung;
- beleuchtete Kennzeichen;
- Verkehrssignale; und
- Automobilbeleuchtung.

**11.** Verwendung gemäß Anspruch 10, **dadurch gekennzeichnet, dass** die Abdeckung die Form eines Buchstabens oder einer Ziffer aufweist.

**12.** Verwendung gemäß Anspruch 10, **dadurch gekennzeichnet, dass** die Automobilbeleuchtung ein Frontscheinwerfer, ein Tagfahrscheinwerfer, ein Richtungsanzeiger, ein Bremsscheinwerfer, ein Nebelscheinwerfer oder ein Rückfahrscheinwerfer ist.

**Revendications**

**1.** Dispositif lumineux comprenant au moins une DEL ayant un flux lumineux de plus de 5 lm, et un couvercle fait d'un plastique transparent dans lequel des particules diffusantes avec une teneur en poids de 5 à 30 % par rapport au plastique transparent sont dispersées et **caractérisé en ce que** le couvercle se présente sous la forme d'une couche unique et **en ce que** les particules diffusantes sont choisies à partir de BaSO$_4$ et que le plastique transparent est choisi à partir de PMMA qui est un homopolymère de méthacrylate de méthyle ou un copolymère comprenant de 80 à 99,5 % en poids de méthacrylate de méthyle et de 0,5 à 20 % en poids d'au moins un monomère ayant au moins une insaturation éthylénique qui peut copolymériser avec le méthacrylate de méthyle.

**2.** Dispositif lumineux selon la revendication 1, **caractérisé en ce que** le plastique transparent est du type thermoplastique et a une transmission lumineuse dans la gamme visible d'au moins 50 %, selon la norme DIN 67-507.

**3.** Dispositif lumineux selon l'une ou l'autre des revendications 1 et 2, **caractérisé en ce que** le plastique transparent est un copolymère comprenant, en poids, 90 à 99,5 % de méthacrylate de méthyle et 0,5 à 10 % d'au moins un monomère ayant au moins une insaturation éthylénique qui peut être copolymérisé avec le méthacrylate de méthyle.

**4.** Dispositif lumineux selon l'une quelconque des revendications précédentes, **caractérisé en ce que** le monomère ayant au moins une insaturation éthylénique qui peut être copolymérisé avec du méthacrylate de méthyle est choisi parmi le styrène, l'alpha-méthylstyrène, les acides acryliques et méthacryliques et les (méth)acrylates d'alkyle dans lesquels le groupe alkyle a de 2 à 4 atomes de carbone.

**5.** Dispositif lumineux selon l'une des revendications précédentes, **caractérisé en ce que** le monomère ayant au moins une insaturation éthylénique qui peut être copolymérisé avec du méthacrylate de méthyle est choisi parmi l'acrylate de méthyle et l'acrylate d'éthyle.

**6.** Dispositif lumineux selon l'une des revendications précédentes, **caractérisé en ce que** la différence entre les indices de réfraction selon ASTM D 542 des particules diffusantes et du plastique transparent est supérieure à 0,02.

**7.** Dispositif lumineux selon la revendication 1, **caractérisé en ce que** le diamètre moyen des particules diffusantes minérales se situe entre 0,5 et 15 $\mu$m.

**8.** Dispositif lumineux selon l'une ou l'autre des revendications 1 et 7, **caractérisé en ce que** la teneur en particules diffusantes se situe entre 5 et 10 %.

**9.** Dispositif lumineux selon l'une des revendications 1 à 8, **caractérisé en ce qu'**au moins une des faces du couvercle a une rugosité Ra comprise entre 0,5 et 4 $\mu$m.

**10.** Utilisation du dispositif lumineux selon l'une quelconque des revendications 1 à 9 pour :

- l'éclairage intérieur ;
- les écrans publicitaires ;
- l'éclairage de directions ou le marquage d'issues de secours ;
- les enseignes lumineuses ;
- la signalisation du trafic ; et
- l'éclairage automobile.

**11.** Utilisation selon la revendication 10, **caractérisée en ce que** le couvercle a la forme d'une lettre ou d'un chiffre.

**12.** Utilisation selon la revendication 10, **caractérisée en ce que** l'éclairage automobile est un phare, un feu de croisement, un indicateur de direction, un feu stop, un phare antibrouillard ou un feu de recul.

1/3

FIG.1

FIG.2

FIG.3

14

FIG.4

FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6723772 B
- US 20040191550 A
- EP 1369224 A
- WO 03052315 A
- US 6449439 B
- US 4180494 A
- US 3808180 A
- US 4096202 A
- US 4260693 A
- US 3287443 A
- US 3657391 A
- US 4299928 A
- US 3985704 A
- US 5773520 A
- US 6084250 A
- WO 03072645 A
- EP 1172341 A
- WO 03083564 A
- US 3497981 A
- US 20040255497 A
- FR 2857434
- EP 1402504 A
- US 20050039361 A
- EP 1369224 A1
- EP 0893481 A

### Non-patent literature cited in the description

- Electroluminescent Materials and Devices. Ullmann's Encyclopaedia of Industrial Chemistry. vol. A9, 255-264
- **S.M. SZE.** Modern Semiconductor Device Physics. Wiley, 1997